(19) Europäisches Patentamt
European Patent Office
Office européen des brevets

(11) EP 4 223 787 A1

(12) EUROPEAN PATENT APPLICATION
published in accordance with Art. 153(4) EPC

(43) Date of publication:
**09.08.2023 Bulletin 2023/32**

(21) Application number: **21885718.3**

(22) Date of filing: **10.09.2021**

(51) International Patent Classification (IPC):
***C08C 19/20*** ***(2006.01)*** ***C08C 19/22*** ***(2006.01)***
***C08J 9/06*** ***(2006.01)***

(52) Cooperative Patent Classification (CPC):
**C08C 19/20; C08C 19/22; C08J 9/06**

(86) International application number:
**PCT/JP2021/033385**

(87) International publication number:
**WO 2022/091599 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.10.2020 JP 2020179391**

(71) Applicant: **Denka Company Limited**
**Tokyo 103-8338 (JP)**

(72) Inventors:
- **KONDO, Atsunori**
  **Tokyo 103-8338 (JP)**
- **SUNADA, Takashi**
  **Tokyo 103-8338 (JP)**

(74) Representative: **Hoffmann Eitle**
**Patent- und Rechtsanwälte PartmbB**
**Arabellastraße 30**
**81925 München (DE)**

# (54) RUBBER FOAM COMPOSITION, FOAM AND MOLDED ARTICLE

(57) A rubber foam composition containing a sulfur-modified chloroprene rubber and a chemical foaming agent, in which the sulfur-modified chloroprene rubber has a functional group A represented by specific General Formula (A) and positioned at a molecular terminal, in the sulfur-modified chloroprene rubber, a mass ratio B/A of a content of a functional group B represented by specific General Formula (B) and positioned at a molecular terminal with respect to a content of the functional group A is 12.00 or less, a total amount of the functional group A and the functional group B is 0.10 to 1.00% by mass, and a content of the chemical foaming agent is 3 to 16 parts by mass with respect to a total of 100 parts by mass of the sulfur-modified chloroprene rubber, a thiazole compound, and a dithiocarbamic acid-based compound.

EP 4 223 787 A1

## Description

### Technical Field

The present invention relates to a rubber foam composition, a foamed product, a molded article, and the like.

### Background Art

Chloroprene rubbers have been used as materials for common industrial transmission belts or conveyor belts; automobile air springs; vibration-proof rubbers, and the like, by utilizing excellent dynamic properties thereof. Furthermore, a foamed product of a chloroprene rubber (chloroprene rubber sponge) can be obtained by mixing a chloroprene rubber and a foaming agent and heat-foaming, and the foamed product of the chloroprene rubber has been used in various fields such as automotive parts, architecture fields, and leisure goods.

As the foamed product of the chloroprene rubber, a foamed product obtained by blending an organic peroxide, a foaming agent, a softener, a filler, and a reinforcing agent with a chloroprene rubber and heat-foaming (see, for example, Patent Literature 1 below), and a foamed product obtained by blending a butadiene rubber, a softener, and a foaming agent with a chloroprene rubber and foaming by non-pressure open vulcanization (see, for example, Patent Literature 2 below) are known.

### Citation List

### Patent Literature

Patent Literature 1: Japanese Unexamined Patent Publication No. 2012-067235
Patent Literature 2: Japanese Unexamined Patent Publication No. H10-298328

### Summary of Invention

### Technical Problem

The foamed product of the chloroprene rubber is a material having voids and thus has a problem in that a tear strength is not sufficient. For example, in the techniques described in Patent Literatures 1 and 2 mentioned above, although a foamed product having a high foaming ratio is obtained, the tear strength of the foamed product is small. Therefore, development of a foamed product that can be used for use applications requiring a high tear strength (such as a wet suit) has been demanded.

Furthermore, the foamed product of the chloroprene rubber is a material having voids and thus has a problem in that the foamed product shrinks due to changes over time. Therefore, for a rubber foam composition using a chloroprene rubber, development of a rubber foam composition that provides a foamed product having a high tear strength and a small shrinkage rate has been demanded.

An object of an aspect of the present invention is to provide a rubber foam composition with which a foamed product having a high tear strength and a small shrinkage rate is obtained. An object of another aspect of the present invention is to provide a foamed product of the rubber foam composition. An object of still another aspect of the present invention is to provide a molded article made of the foamed product.

### Solution to Problem

The inventors of the present application have conducted intensive studies in order to solve such problems, and as a result, they have completed a rubber foam composition with which a foamed product having a high tear strength and a small shrinkage rate is obtained, by introducing a specific structure in a molecular terminal of a sulfur-modified chloroprene rubber and using a specific amount of a chemical foaming agent.

An aspect of the present invention provides a rubber foam composition containing a sulfur-modified chloroprene rubber and a chemical foaming agent, in which the sulfur-modified chloroprene rubber has a functional group A represented by General Formula (A) below and positioned at a molecular terminal, in the sulfur-modified chloroprene rubber, a mass ratio B/A of a content of a functional group B represented by General Formula (B) below and positioned at a molecular terminal with respect to a content of the functional group A is 12.00 or less, a total amount of the functional group A and the functional group B is 0.10 to 1.00% by mass, and a content of the chemical foaming agent is 3 to 16

parts by mass with respect to a total of 100 parts by mass of the sulfur-modified chloroprene rubber, a thiazole compound, and a dithiocarbamic acid-based compound.

[Chemical Formula 1]

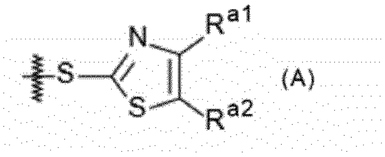

(In the formula, $R^{a1}$ and $R^{a2}$ each independently represent a hydrogen atom, a halogen atom, a hydroxy group, an alkoxy group, a carboxy group, a carboxylate group, a cyano group, an alkyl group which may have a substituent, or an arylthio group which may have a substituent, and $R^{a1}$ and $R^{a2}$ may bond with each other to form a ring which may have a substituent.)

[Chemical Formula 2]

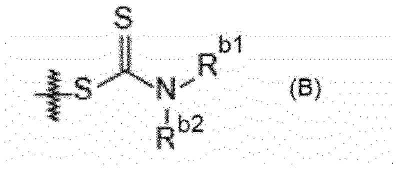

(In the formula, $R^{b1}$ and $R^{b2}$ each independently represent an alkyl group which may have a substituent or an aryl group which may have a substituent.)

According to the rubber foam composition of the aspect of the present invention, a foamed product having a high tear strength and a small shrinkage rate can be obtained.

Another aspect of the present invention provides a foamed product of the aforementioned rubber foam composition. Still another aspect of the present invention provides a molded article made of the foamed product.

### Advantageous Effects of Invention

According to an aspect of the present invention, it is possible to provide a rubber foam composition with which a foamed product having a high tear strength and a small shrinkage rate is obtained. According to another aspect of the present invention, it is possible to provide a foamed product of the rubber foam composition. According to still another aspect of the present invention, it is possible to provide a molded article made of the foamed product (a molded article using the foamed product).

### Description of Embodiments

Hereinafter, embodiments for carrying out the present invention will be described. Embodiments described below are only typical exemplary embodiments of the present invention and the scope of the present invention is not restricted by these at all.

In the present specification, a numerical range that has been indicated by use of "to" indicates the range that includes the numerical values which are described before and after "to", as the minimum value and the maximum value, respectively. "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. An "alkyl group" may be linear, branched or cyclic, unless

otherwise specified.

<Rubber foam composition>

A rubber foam composition of the present embodiment contains a sulfur-modified chloroprene rubber and a chemical foaming agent, in which the sulfur-modified chloroprene rubber has a functional group A represented by General Formula (A) below and positioned at a molecular terminal (hereinafter, referred to as "terminal functional group A"), in the sulfur-modified chloroprene rubber, a mass ratio B/A of a content of a functional group B represented by General Formula (B) below and positioned at a molecular terminal (hereinafter, referred to as "terminal functional group B") with respect to a content of the terminal functional group A is 12.00 or less, a total amount of the terminal functional group A and the terminal functional group B is 0.10 to 1.00% by mass, and a content of the chemical foaming agent is 3 to 16 parts by mass with respect to a total of 100 parts by mass of the sulfur-modified chloroprene rubber, a thiazole compound, and a dithiocarbamic acid-based compound.

[Chemical Formula 3]

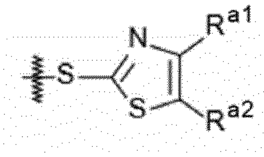

(A)

(In the formula, $R^{a1}$ and $R^{a2}$ each independently represent a hydrogen atom, a halogen atom, a hydroxy group, an alkoxy group, a carboxy group, a carboxylate group, a cyano group, an alkyl group which may have a substituent, or an arylthio group which may have a substituent. $R^{a1}$ and $R^{a2}$ may be identical to or different from each other. $R^{a1}$ and $R^{a2}$ may bond with each other to form a ring which may have a substituent. $R^{a1}$ and $R^{a2}$ can bond with each other to form a ring which has a substituent or a ring which does not have a substituent.)

[Chemical Formula 4]

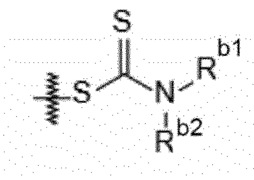

(B)

(In the formula, $R^{b1}$ and $R^{b2}$ each independently represent an alkyl group which may have a substituent or an aryl group which may have a substituent. $R^{b1}$ and $R^{b2}$ may be identical to or different from each other.)

A foamed product can be obtained by foaming the rubber foam composition (foamable rubber composition) of the present embodiment. According to the rubber foam composition of the present embodiment, as a foamed product obtained by foaming the rubber foam composition, a foamed product having a high tear strength and a small shrinkage rate (a shrinkage rate of a foamed product immediately after preparation) can be obtained, and in evaluation of Examples described below, a tear strength of 2.00 N/mm or more (preferably, 3.00 N/mm or more or 4.00 N/mm or more) and a shrinkage rate of less than 5.5% (preferably, 5.4% or less or 5.3% or less) can be obtained. Furthermore, according to an aspect of the rubber foam composition of the present embodiment, a foamed product having excellent appearance in addition to a high tear strength and a small shrinkage rate can be obtained.

The sulfur-modified chloroprene rubber is a polymer having a structural unit derived from chloroprene (2-chloro-1,3-butadiene). The sulfur-modified chloroprene rubber includes a sulfur atom in a molecule chain, and may include a sulfur atom in a main chain. The sulfur-modified chloroprene rubber may include a polysulfide bond ($S_2$ to $S_8$) in a molecule chain, and may include a polysulfide bond ($S_2$ to $S_8$) in a main chain.

The sulfur-modified chloroprene rubber may have a structural unit derived from a monomer copolymerizable with chloroprene. Examples of the monomer copolymerizable with chloroprene include 2,3-dichloro-1,3-butadiene, 1-chloro-1,3-butadiene, styrene, acrylonitrile, methacrylonitrile, isoprene, butadiene, acrylic acid, methacrylic acid, and esters of these. The monomer copolymerizable with chloroprene may be used alone or in combination of two or more kinds thereof.

For example, when 2,3-dichloro-1,3-butadiene among the monomers copolymerizable with chloroprene is used,

the crystallization speed of a sulfur-modified chloroprene rubber to be obtained can be delayed. A sulfur-modified chloroprene rubber with a slow crystallization speed can maintain rubber elasticity even in a low-temperature environment, and for example, low-temperature compression set can be improved.

In the case of using the monomer copolymerizable with chloroprene, the used amount of the monomer copolymerizable with chloroprene (the content of the structural unit derived from the monomer copolymerizable with chloroprene) is preferably 10% by mass or less in all the monomers including chloroprene (the total amount of the structural units constituting the sulfur-modified chloroprene rubber). When this used amount is 10% by mass or less, deterioration in processability of the sulfur-modified chloroprene rubber is easily suppressed. From the same viewpoints, the used amount of chloroprene (the content of the structural unit derived from chloroprene) is preferably 90% by mass or more, 92% by mass or more, 95% by mass or more, or 98% by mass or more in all the monomers including chloroprene (the total amount of the structural units constituting the sulfur-modified chloroprene rubber). An aspect in which the structural unit constituting the sulfur-modified chloroprene rubber is composed of the structural unit derived from chloroprene (substantially 100% by mass of the structural unit constituting the sulfur-modified chloroprene rubber is the structural unit derived from chloroprene) may be employed.

In the sulfur-modified chloroprene rubber, the terminal functional group A may be positioned at the terminal of the main chain and/or the side chain. The terminal functional group A can be obtained, for example, by using a thiazole compound in a molecular weight adjustment step described below. Examples of the substituent with respect to the alkyl group for $R^{a1}$ or $R^{a2}$ include a halogen atom, a hydroxy group, an alkoxy group, a carboxy group, a carboxylate group, a cyano group, a sulfo group, a sulfonate group, a nitro group, and an amino group. Examples of the substituent with respect to the arylthio group for $R^{a1}$ or $R^{a2}$ include an alkyl group, a halogen atom, a hydroxy group, an alkoxy group, a carboxy group, a carboxylate group, a cyano group, a sulfo group, a sulfonate group, a nitro group, and an amino group.

In the terminal functional group A, $R^{a1}$ and $R^{a2}$ may bond with each other to form a ring which may have a substituent. Examples of the ring include an aromatic ring, an alicyclic ring, and a heterocyclic ring. Examples of the substituent with respect to the ring include an alkyl group, a halogen atom, a hydroxy group, an alkoxy group, a carboxy group, a carboxylate group, a cyano group, a sulfo group, a sulfonate group, a nitro group, and an amino group. Examples of the alkyl group that is a substituent with respect to the ring include an alkyl group having 1, 2, 3, or 4 carbon atoms. From the viewpoint of easily improving a tear strength, easily reducing a shrinkage rate, and easily obtaining excellent appearance, in a foamed product, the terminal functional group A preferably has a benzothiazole ring formed by $R^{a1}$ and $R^{a2}$ bonding with each other. The benzothiazole ring may not have a substituent. In a case where the benzothiazole ring has a substituent, the substituent is preferably an alkyl group, and more preferably an alkyl group bonded in 4-position of the benzothiazole ring, from the viewpoint of easily improving a tear strength, easily reducing a shrinkage rate, and easily obtaining excellent appearance, in a foamed product.

The sulfur-modified chloroprene rubber may have the terminal functional group B, and may not have the terminal functional group B. The terminal functional group B may be positioned at the terminal of the main chain and/or the side chain. The terminal functional group B can be obtained, for example, by using a dithiocarbamic acid-based compound in the molecular weight adjustment step described below.

The number of carbon atoms of at least one selected from $R^{b1}$ and $R^{b2}$ is preferably 6 to 10, more preferably 7 to 9, and further preferably 7 or 8, from the viewpoint of easily improving a tear strength, easily reducing a shrinkage rate, and easily obtaining excellent appearance, in a foamed product. Examples of the substituent with respect to the alkyl group for $R^{b1}$ or $R^{b2}$ include a halogen atom, a hydroxy group, an alkoxy group, a carboxy group, a carboxylate group, a cyano group, a sulfo group, a sulfonate group, a nitro group, and an amino group. Examples of the aryl group for $R^{b1}$ or $R^{b2}$ include a benzyl group, a phenyl group, a tolyl group, a xylyl group, and a naphthyl group. Examples of the substituent with respect to the aryl group for $R^{b1}$ or $R^{b2}$ include an alkyl group, a halogen atom, a hydroxy group, an alkoxy group, a carboxy group, a carboxylate group, a cyano group, a sulfo group, a sulfonate group, a nitro group, and an amino group. The alkyl group or the aryl group for $R^{b1}$ or $R^{b2}$ may not have a substituent. The rubber foam composition of the present embodiment may be an embodiment in which the sulfur-modified chloroprene rubber does not have a functional group in which $R^{b1}$ and $R^{b2}$ are an ethyl group (unsubstituted ethyl group) as the terminal functional group B.

The content of the terminal functional group A is preferably in the following range on the basis of the total amount of the sulfur-modified chloroprene rubber (that is, the sulfur-modified chloroprene rubber preferably contains the terminal functional group A having the following numerical value content (unit: parts by mass) with respect to 100 parts by mass of the sulfur-modified chloroprene rubber). The content of the terminal functional group A is preferably 0.50% by mass or less, 0.45% by mass or less, 0.42% by mass or less, 0.40% by mass or less, 0.38% by mass or less, 0.35% by mass or less, 0.30% by mass or less, 0.25% by mass or less, 0.23% by mass or less, 0.20% by mass or less, 0.18% by mass or less, 0.16% by mass or less, 0.15% by mass or less, 0.14% by mass or less, 0.13% by mass or less, 0.12% by mass or less, 0.11% by mass or less, 0.10% by mass or less, 0.09% by mass or less, 0.08% by mass or less, 0.07% by mass or less, 0.06% by mass or less, 0.05% by mass or less, or 0.04% by mass or less, from the viewpoint of easily improving a tear strength and easily obtaining excellent appearance in a foamed product. The content of the terminal

functional group A is preferably 0.01% by mass or more, 0.03% by mass or more, 0.04% by mass or more, 0.05% by mass or more, 0.06% by mass or more, 0.07% by mass or more, 0.08% by mass or more, 0.09% by mass or more, 0.10% by mass or more, 0.11% by mass or more, 0.12% by mass or more, 0.13% by mass or more, 0.14% by mass or more, 0.15% by mass or more, 0.16% by mass or more, 0.18% by mass or more, 0.20% by mass or more, 0.23% by mass or more, 0.25% by mass or more, 0.30% by mass or more, 0.35% by mass or more, 0.38% by mass or more, 0.40% by mass or more, or 0.42% by mass or more, from the viewpoint of easily reducing a shrinkage rate and easily obtaining excellent appearance in a foamed product. From these viewpoints, the content of the terminal functional group A is preferably 0.01 to 0.50% by mass, 0.04 to 0.42% by mass, 0.04 to 0.40% by mass, 0.04 to 0.30% by mass, 0.04 to 0.20% by mass, 0.04 to 0.10% by mass, 0.05 to 0.42% by mass, 0.10 to 0.42% by mass, 0.20 to 0.42% by mass, 0.30 to 0.42% by mass, 0.05 to 0.40% by mass, or 0.08 to 0.30% by mass. The content of the terminal functional group A can be adjusted by the amount of the thiazole compound used in the molecular weight adjustment step described below, the treatment time and the treatment temperature of the molecular weight adjustment step, and the like.

The content of the terminal functional group B is not particularly limited, and is preferably in the following range on the basis of the total amount of the sulfur-modified chloroprene rubber (that is, the sulfur-modified chloroprene rubber preferably contains the terminal functional group B having the following numerical value content (unit: parts by mass) with respect to 100 parts by mass of the sulfur-modified chloroprene rubber). The content of the terminal functional group B is preferably less than 1.00% by mass, 0.90% by mass or less, 0.80% by mass or less, 0.70% by mass or less, 0.60% by mass or less, 0.50% by mass or less, 0.47% by mass or less, 0.45% by mass or less, 0.42% by mass or less, 0.40% by mass or less, 0.35% by mass or less, 0.33% by mass or less, 0.32% by mass or less, 0.30% by mass or less, or 0.29% by mass or less, from the viewpoint of easily improving a tear strength and easily obtaining excellent appearance in a foamed product. The content of the terminal functional group B is preferably 0.25% by mass or less, 0.23% by mass or less, 0.20% by mass or less, 0.19% by mass or less, 0.15% by mass or less, 0.14% by mass or less, 0.13% by mass or less, 0.12% by mass or less, 0.10% by mass or less, 0.09% by mass or less, 0.07% by mass or less, 0.06% by mass or less, 0.05% by mass or less, 0.03% by mass or less, or 0.01% by mass or less, from the viewpoint of easily reducing a shrinkage rate and easily obtaining excellent appearance in a foamed product. The content of the terminal functional group B may be 0% by mass or more and may be more than 0% by mass. The content of the terminal functional group B is preferably 0.01% by mass or more, 0.03% by mass or more, 0.05% by mass or more, 0.06% by mass or more, 0.07% by mass or more, 0.09% by mass or more, 0.10% by mass or more, 0.12% by mass or more, 0.13% by mass or more, 0.14% by mass or more, 0.15% by mass or more, 0.19% by mass or more, 0.20% by mass or more, or 0.23% by mass or more, from the viewpoint of easily reducing a shrinkage rate and easily obtaining excellent appearance in a foamed product. The content of the terminal functional group B is preferably 0.25% by mass or more, 0.29% by mass or more, 0.30% by mass or more, 0.32% by mass or more, 0.33% by mass or more, 0.35% by mass or more, 0.40% by mass or more, 0.42% by mass or more, 0.45% by mass or more, or 0.47% by mass or more, from the viewpoint of easily improving a tear strength and easily obtaining excellent appearance in a foamed product. The content of the terminal functional group B may be 0.50% by mass or more, 0.60% by mass or more, 0.70% by mass or more, or 0.80% by mass or more. From these viewpoints, the content of the terminal functional group B is preferably 0% by mass or more and less than 1.00% by mass, 0 to 0.90% by mass, 0 to 0.80% by mass, 0 to 0.70% by mass, 0 to 0.45% by mass, 0 to 0.25% by mass, 0 to 0.15% by mass, more than 0% by mass and less than 1.00% by mass, more than 0% by mass and 0.70% by mass or less, more than 0% by mass and 0.45% by mass or less, more than 0% by mass and 0.25% by mass or less, 0.10 to 0.70% by mass, 0.10 to 0.45% by mass, 0.10 to 0.25% by mass, 0.20 to 0.70% by mass, 0.25 to 0.70% by mass, or 0.45 to 0.70% by mass. The content of the terminal functional group B can be adjusted by the amount of the dithiocarbamic acid-based compound used in the molecular weight adjustment step described below, the treatment time and the treatment temperature of the molecular weight adjustment step, and the like.

The mass ratio B/A of the content of the terminal functional group B with respect to the terminal functional group A is 12.00 or less (0 to 12.00) from the viewpoint of obtaining a small shrinkage rate in a foamed product.

The mass ratio B/A may be 11.60 or less, 11.00 or less, 10.00 or less, 9.00 or less, 8.00 or less, 7.00 or less, 6.00 or less, 5.00 or less, 4.00 or less, 3.00 or less, 2.50 or less, 2.20 or less, 2.00 or less, 1.50 or less, 1.00 or less, 0.60 or less, 0.50 or less, 0.40 or less, 0.30 or less, 0.20 or less, or 0.10 or less, from the viewpoint of easily obtaining a small shrinkage rate in a foamed product. The mass ratio B/A is 0 or more, and from the viewpoint of easily improving a tear strength in a foamed product, is preferably more than 0 and preferably 0.10 or more, 0.20 or more, 0.30 or more, 0.40 or more, 0.50 or more, 0.60 or more, 1.00 or more, 1.50 or more, 2.00 or more, 2.20 or more, 2.50 or more, 3.00 or more, 4.00 or more, 5.00 or more, 6.00 or more, 7.00 or more, 8.00 or more, 9.00 or more, 10.00 or more, 11.00 or more, or 11.60 or more. From these viewpoints, the mass ratio B/A is preferably more than 0 and 12.00 or less, more than 0 and 10.00 or less, more than 0 and 6.00 or less, more than 0 and 1.00 or less, more than 0 and 0.80 or less, more than 0 and 0.60 or less, 0.10 to 12.00, 0.50 to 12.00, 0.55 to 12.00, 0.80 to 12.00, 1.00 to 12.00, 6.00 to 12.00, 8.00 to 12.00, 0.10 to 10.00, 0.50 to 10.00, 1.00 to 10.00, or 1.00 to 6.00.

The total amount of the terminal functional group A and the terminal functional group B (the total of the contents of the terminal functional group A and the terminal functional group B; a mass total (A + B)) is 0.10 to 1.00% by mass

on the basis of the total amount of the sulfur-modified chloroprene rubber. When the mass total (A + B) is less than 0.10% by mass, in a foamed product, shrinkage rate is increased and excellent appearance is not obtained. When the mass total (A + B) is more than 1.00% by mass, a decrease in Mooney viscosity is significant, which is not practical (a foamed product is not obtained).

The mass total (A + B) may be in the following range on the basis of the total amount of the sulfur-modified chloroprene rubber. The mass total (A + B) may be 0.15% by mass or more, 0.20% by mass or more, 0.24% by mass or more, 0.25% by mass or more, 0.30% by mass or more, 0.35% by mass or more, 0.37% by mass or more, 0.38% by mass or more, 0.40% by mass or more, 0.42% by mass or more, 0.45% by mass or more, 0.50% by mass or more, 0.51% by mass or more, 0.55% by mass or more, 0.57% by mass or more, 0.60% by mass or more, 0.65% by mass or more, 0.66% by mass or more, 0.70% by mass or more, 0.80% by mass or more, 0.85% by mass or more, or 0.88% by mass or more, from the viewpoint of adjusting a balance between a tear strength and a shrinkage rate in a foamed product. The mass total (A + B) may be 0.90% by mass or less, 0.88% by mass or less, 0.85% by mass or less, 0.80% by mass or less, 0.70% by mass or less, 0.66% by mass or less, 0.65% by mass or less, 0.60% by mass or less, 0.57% by mass or less, 0.55% by mass or less, 0.51% by mass or less, 0.50% by mass or less, 0.45% by mass or less, 0.42% by mass or less, 0.40% by mass or less, 0.38% by mass or less, 0.37% by mass or less, 0.35% by mass or less, 0.30% by mass or less, 0.25% by mass or less, or 0.24% by mass or less, from the viewpoint of adjusting a balance between a tear strength and a shrinkage rate in a foamed product. From these viewpoints, the mass total (A + B) may be 0.20 to 0.90% by mass, 0.20 to 0.70% by mass, 0.20 to 0.65% by mass, 0.20 to 0.55% by mass, 0.20 to 0.40% by mass, 0.40 to 0.70% by mass, or 0.55 to 0.70% by mass.

The contents of the terminal functional group A and the terminal functional group B in the sulfur-modified chloroprene rubber can be quantified by the procedure described in Examples.

The sulfur-modified chloroprene rubber may not have a functional group represented by General Formula (C) below, and may not have a functional group represented by General Formula (C) below and positioned at a molecular terminal.

[Chemical Formula 5]

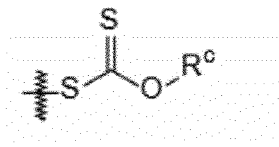
(C)

(In the formula, $R^c$ represents a hydrogen atom or an alkyl group having 1 to 4 carbon atoms which may have a substituent.)

A method for producing a sulfur-modified chloroprene rubber has a polymerization step of subjecting chloroprene to emulsion polymerization in the presence of sulfur (Ss) to obtain a polymer, and a molecular weight adjustment step (mixing step) of mixing the above-described polymer and a thiazole compound. An aspect of the method for producing the sulfur-modified chloroprene rubber has a polymerization step of subjecting at least chloroprene and sulfur to emulsion polymerization to obtain a polymer solution and a molecular weight adjustment step of adjusting a molecular weight of the polymer in the polymer solution by adding a thiazole compound into the polymer solution.

In the method for producing the sulfur-modified chloroprene rubber, for example, sulfur can be introduced in the polymer (for example, the main chain of the polymer), and a polysulfide bond ($S_2$ to $S_8$) can also be introduced. The sulfur-modified chloroprene rubber encompasses a latex obtained by using a thiazole compound to adjust a molecular weight of a sulfur-modified chloroprene polymer containing an introduced-sulfur, which is obtained, in the presence of sulfur, by subjecting a single substance of chloroprene to emulsion polymerization or by subjecting chloroprene and another monomer to emulsion polymerization, and a sulfur-modified chloroprene rubber obtained by drying and washing this latex by a general method.

Hereinafter, the detailed description will be given along the method for producing the sulfur-modified chloroprene rubber.

In the method for producing the sulfur-modified chloroprene rubber, first, in the polymerization step, chloroprene is subjected to emulsion polymerization in the presence of sulfur to obtain a polymer. The polymer may be a polymer in a polymer solution. In the polymerization step, as necessary, chloroprene and the aforementioned monomer copolymerizable with chloroprene may be subjected to emulsion polymerization. The used amount of chloroprene or the used amount of the monomer copolymerizable with chloroprene is preferably the aforementioned used amount.

The used amount of sulfur ($S_8$) in the emulsion polymerization is preferably in the following range with respect to 100 parts by mass of monomers (the total of monomers to be polymerized). The used amount of sulfur is preferably 0.01 parts by mass or more and more preferably 0.1 parts by mass or more, from the viewpoint of easily obtaining

sufficient mechanical properties or dynamic properties of a sulfur-modified chloroprene rubber to be obtained. The used amount of sulfur is preferably 0.6 parts by mass or less and more preferably 0.5 parts by mass or less, from the viewpoint of easy processing by suppression of an excessive increase in adhesion of a sulfur-modified chloroprene rubber to be obtained to a metal. From these viewpoints, the used amount of sulfur is preferably 0.01 to 0.6 parts by mass and more preferably 0.1 to 0.5 parts by mass.

As an emulsifier used in emulsion polymerization, one or two or more kinds of known emulsifiers, which can be used in emulsion polymerization of chloroprene, can be freely selected and used. Examples of the emulsifier include rosin acids, fatty acids, a metal salt of aromatic sulfonic acid formalin condensate, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate. From the viewpoint of easily improving a tear strength, easily reducing a shrinkage rate, and easily obtaining excellent appearance, in a foamed product, the emulsifier is preferably rosin acids. The "rosin acids" mean rosin acid, disproportionated rosin acid, alkali metal salts of disproportionated rosin acid (for example, disproportionated potassium rosinate), and the like. Examples of the constituent of disproportionated rosin acid include sesquiterpene, 8,5-isopimaric acid, dihydropimaric acid, secodehydroabietic acid, dihydroabietic acid, deisopropyldehydroabietic acid, and demethyldehydroabietic acid. Examples of the fatty acids include fatty acids (for example, saturated or unsaturated fatty acids having 6 to 22 carbon atoms) and metal salts of fatty acids (for example, sodium lauryl sulfate).

From the viewpoint of easily improving a tear strength, easily reducing a shrinkage rate, and easily obtaining excellent appearance, in a foamed product, the emulsifier is preferably a metal salt of aromatic sulfonic acid formalin condensate and more preferably a sodium salt of β-naphthalene sulfonic acid formalin condensate. The sodium salt of β-naphthalene sulfonic acid formalin condensate is an emulsifier which is commonly used, stability is improved by adding a small amount thereof, and a latex can be stably produced without aggregation and precipitation in the production process. As another emulsifier which is suitably used, for example, an aqueous alkali soap solution composed of a mixture of alkali metal salts of disproportionated rosin acid and saturated or unsaturated fatty acids having 6 to 22 carbon atoms is mentioned.

The pH of the emulsion (for example, the aqueous emulsion) at the time of emulsion polymerization initiation is preferably 10.5 or more. Herein, the "emulsion" is a liquid mixture of chloroprene and other components (such as a monomer copolymerizable with chloroprene, an emulsifier, and sulfur ($S_8$)) immediately before emulsion polymerization initiation. The "emulsion" also encompasses a case where the composition sequentially varies by adding these other components (such as a monomer copolymerizable with chloroprene, and sulfur ($S_8$)) afterward, portionwise, etc. When the pH of the emulsion is 10.5 or more, polymer precipitation or the like during polymerization is prevented so that the polymerization can be stably controlled. This effect can be particularly suitably obtained in the case of using rosin acids as an emulsifier. The pH of the emulsion can be adjusted by the amount of the alkali component such as sodium hydroxide or potassium hydroxide, which is present during emulsion polymerization.

The polymerization temperature of emulsion polymerization is preferably 0°C to 55°C and more preferably 30°C to 55°C, from the viewpoint of excellent polymerization regulation and productivity.

As a polymerization initiator, potassium persulfate, benzoyl peroxide, ammonium persulfate, hydrogen peroxide, or the like, which is usually used in radical polymerization, can be used. For example, the polymerization is performed in the following polymerization rate (conversion rate) range and then is terminated by adding a polymerization terminator (polymerization inhibitor).

The polymerization rate is preferably 60% or more and more preferably 70% or more, from the viewpoint of excellent productivity. The polymerization rate is preferably 95% or less and more preferably 90% or less, from the viewpoint of suppressing the development of the branched structure or gel formation affecting processability of a sulfur-modified chloroprene rubber to be obtained. From these viewpoints, the polymerization rate is preferably 60 to 95% and more preferably 70 to 90%.

Examples of the polymerization terminator include diethylhydroxylamine, thiodiphenylamine, 4-tert-butylcatechol, and 2,2'-methylenebis-4-methyl-6-tert-butylphenol. The polymerization terminator may be used alone or in combination of two or more kinds thereof.

In the molecular weight adjustment step, the polymer obtained in the polymerization step and a thiazole compound are mixed. In the molecular weight adjustment step, by reacting the polymer obtained in the polymerization step and a thiazole compound with each other, the molecular weight of the polymer can be adjusted, and for example, by adding a thiazole compound into the polymer solution obtained in the polymerization step, the molecular weight of the polymer in the polymer solution can be adjusted. In the molecular weight adjustment step, for example, sulfur (for example, a polysulfide bond ($S_2$ to Ss)) and a thiazole compound present in the polymer (for example, the main chain of the polymer) are reacted with each other, and thereby the polymer can be cut or depolymerized while the aforementioned terminal functional group A derived from a thiazole compound is formed. Hereinafter, chemicals used for cutting or depolymerization of the polymer are referred to as "molecular weight adjustor".

As the thiazole compound (a compound having a thiazole ring), one or two or more kinds of known thiazole compounds can be freely selected and used. From the viewpoint of easily improving a tear strength, easily reducing a shrinkage rate, and easily obtaining excellent appearance, in a foamed product, the thiazole compound preferably includes at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole. From the viewpoint of easily improving a tear strength, easily reducing a shrinkage rate, and easily obtaining excellent appearance, in a foamed product, the thiazole compound preferably includes a benzothiazole compound (a compound having a benzothiazole ring). The rubber foam composition of the present embodiment may be an embodiment in which the thiazole compound does not include N-cyclohexyl-2-benzothiazole sulfenamide and N-(tert-butyl)-2-benzothiazole sulfenamide.

The used amount (addition amount) of the thiazole compound is preferably 0.2 to 3 parts by mass with respect to 100 parts by mass of the polymer (for example, the polymer in the polymer solution). When the used amount of the thiazole compound is 0.2 parts by mass or more, in a foamed product, a tear strength is easily improved, a shrinkage rate is easily reduced, and excellent appearance is easily obtained. When the used amount of the thiazole compound is 3 parts by mass or less, an appropriate Mooney viscosity is easily obtained, and as a result, vulcanization moldability is easily improved. When the used amount of the thiazole compound is 0.2 to 3 parts by mass, the content of the terminal functional group A in the sulfur-modified chloroprene rubber is easily adjusted to 0.01 to 0.50% by mass (for example, 0.05 to 0.40% by mass; basis: the total amount of the sulfur-modified chloroprene rubber), and the content (residual amount) of the thiazole compound in the rubber foam composition is easily adjusted to 0.0001 to 0.0200 parts by mass (for example, 0.0005 to 0.0100 parts by mass; basis: 100 parts by mass of the sulfur-modified chloroprene rubber).

In the molecular weight adjustment step, as a molecular weight adjustor, a thiazole compound and a dithiocarbamic acid-based compound can be used in combination. In the molecular weight adjustment step, the polymer obtained in the polymerization step, the thiazole compound, and the dithiocarbamic acid-based compound can be mixed, and the polymer obtained in the polymerization step, the thiazole compound, and the dithiocarbamic acid-based compound can be reacted with one another. Thereby, the dithiocarbamic acid-based compound reacts with the thiazole compound to form a reactant having higher reactivity with sulfur (for example, a polysulfide bond) in the polymer rather than that in the case of using a single substance of a thiazole compound or a single substance of a dithiocarbamic acid-based compound, and thus the Mooney viscosity can be easily adjusted. The reactant reacts with sulfur in the polymer (for example, a polysulfide bond; for example, sulfur in the main chain of the polymer), and thereby the aforementioned terminal functional group A derived from the thiazole compound and the aforementioned terminal functional group B derived from the dithiocarbamic acid-based compound can be suitably formed.

Examples of the dithiocarbamic acid-based compound include dithiocarbamic acid, dithiocarbamate, monoalkyl dithiocarbamic acid, monoalkyl dithiocarbamate, monoaryl dithiocarbamic acid, monoaryl dithiocarbamate, dialkyl dithiocarbamic acid, dialkyl dithiocarbamate, diaryl dithiocarbamic acid, diaryl dithiocarbamate, tetraalkylthiuram disulfide, and tetraarylalkylthiuram disulfide. Examples of the salt include a sodium salt, a potassium salt, a calcium salt, a zinc salt, an ammonium salt, and a nickel salt.

As the dithiocarbamic acid-based compound, one or two or more kinds of known dithiocarbamic acid-based compounds can be freely selected and used. From the viewpoint of easily improving a tear strength, easily reducing a shrinkage rate, and easily obtaining excellent appearance, in a foamed product, the dithiocarbamic acid-based compound preferably includes at least one compound selected from tetraalkylthiuram disulfide and tetraarylalkylthiuram disulfide. From the viewpoint of easily improving a tear strength, easily reducing a shrinkage rate, and easily obtaining excellent appearance, in a foamed product, the dithiocarbamic acid-based compound preferably includes at least one compound selected from dithiocarbamic acid, sodium dithiocarbamate, potassium dithiocarbamate, calcium dithiocarbamate, zinc dithiocarbamate, ammonium dithiocarbamate, nickel dithiocarbamate, mono-2-ethylhexyl dithiocarbamate, sodium mono-2-ethylhexyl dithiocarbamate, potassium mono-2-ethylhexyl dithiocarbamate, calcium mono-2-ethylhexyl dithiocarbamate, zinc mono-2-ethylhexyl dithiocarbamate, ammonium mono-2-ethylhexyl carbamate, nickel mono-2-ethylhexyl carbamate, monobenzyl dithiocarbamate, sodium monobenzyl dithiocarbamate, potassium monobenzyl dithiocarbamate, calcium monobenzyl dithiocarbamate, zinc monobenzyl dithiocarbamate, ammonium monobenzyl dithiocarbamate, nickel monobenzyl dithiocarbamate, di-2-ethylhexyl dithiocarbamate, sodium di-2-ethylhexyl dithiocarbamate, potassium di-2-ethylhexyl dithiocarbamate, calcium di-2-ethylhexyl dithiocarbamate, zinc di-2-ethylhexyl dithiocarbamate, ammonium di-2-ethylhexyl carbamate, nickel di-2-ethylhexyl carbamate, dibenzyl dithiocarbamate, sodium dibenzyl dithiocarbamate, potassium dibenzyl dithiocarbamate, calcium dibenzyl dithiocarbamate, zinc dibenzyl dithiocarbamate, ammonium dibenzyl dithiocarbamate, nickel dibenzyl dithiocarbamate, tetrakis(2-ethylhexyl)thiuram disulfide, and tetrabenzylthiuram disulfide, and more preferably includes at least one compound selected from dibenzyl dithiocarbamic acid, sodium dibenzyl dithiocarbamate, potassium dibenzyl dithiocarbamate, zinc dibenzyl dithiocarbamate, ammonium dibenzyl dithiocarbamate, nickel dibenzyl dithiocarbamate, sodium di-2-ethylhexyl dithiocarbamate, potassium di-2-ethylhexyl dithiocarbamate, calcium di-2-ethylhexyl dithiocarbamate, zinc di-2-ethylhexyl dithiocarbamate, ammonium di-2-ethylhexylcarbamate, tetrabenzylthiuram disulfide, and tetrakis(2-ethylhexyl)thiuram disulfide.

The used amount (addition amount) of the dithiocarbamic acid-based compound is not particularly limited, and is preferably 0 to 12 parts by mass, more preferably 0 to 8 parts by mass, further preferably more than 0 parts by mass and 8 parts by mass or less, and particularly preferably 0.5 to 4 parts by mass, with respect to 100 parts by mass of the polymer (for example, the polymer in the polymer solution). When the used amount of the dithiocarbamic acid-based compound is within these ranges, the Mooney viscosity is further easily controlled, and in a foamed product, the tear strength is easily improved and excellent appearance is easily obtained. When the used amount of the dithiocarbamic acid-based compound is 0 to 12 parts by mass (for example, 0 to 8 parts by mass), the content of the terminal functional group B in the sulfur-modified chloroprene rubber is easily adjusted to less than 1.00% by mass (for example, 0.80% by mass or less; basis: the total amount of the sulfur-modified chloroprene rubber) and the content (residual amount) of the dithiocarbamic acid-based compound in the rubber foam composition is easily adjusted to 2.50 parts by mass or less (for example, 2.00 parts by mass or less; basis: 100 parts by mass of the sulfur-modified chloroprene rubber).

The sulfur-modified chloroprene rubber may be obtained by performing cooling, pH adjusting, freezing, drying, or the like of the polymer solution subjected to the molecular weight adjustment step by a general method.

The rubber foam composition of the present embodiment contains a chemical foaming agent. The chemical foaming agent may include at least one selected from an organic foaming agent and an inorganic foaming agent. Examples of the organic foaming agent include an azo compound, a nitroso compound, a sulfonyl hydrazide compound, and an azide compound.

Examples of the azo compound include azodicarbonamide, azobisformamide, azobisisobutyronitrile, 2,2'-azobisisobutyronitrile, azohexahydrobenzonitrile, and diazoaminobenzene. Examples of the nitroso compound include N,N'-dinitrosopentamethylenetetramine and N,N'-dinitroso-N,N'-dimethylphthalamide. Examples of the sulfonyl hydrazide compound include p,p'-oxybisbenzenesulfonylhydrazide, benzenesulfonylhydrazide, benzene-1,3-sulfonylhydrazide, diphenylsulfone-3,3'-disulfonylhydrazide, diphenyl oxide-4,4'-disulfonylhydrazide, and paratoluene sulfonylhydrazide. Examples of the azide compound include terephthal azide and p-t-butylbenzazide. Examples of the inorganic foaming agent include sodium hydrogen carbonate, ammonium carbonate, sodium bicarbonate, ammonium bicarbonate, ammonium nitrite, calciumazide, sodiumazide, and sodium borohydride.

From the viewpoint of easily improving a tear strength, easily reducing a shrinkage rate, and easily obtaining excellent appearance, in a foamed product, the chemical foaming agent preferably includes an organic foaming agent, more preferably includes at least one selected from an azo compound, a nitroso compound, a sulfonyl hydrazide compound, and an azide compound, and further preferably includes at least one selected from an azo compound and a sulfonyl hydrazide compound. The chemical foaming agent may include at least one selected from an azo compound, a nitroso compound, a sulfonyl hydrazide compound, an azide compound, and an inorganic foaming agent.

The decomposition temperature of the chemical foaming agent is preferably 120 to 200°C and more preferably 130 to 170°C. When the decomposition temperature of the chemical foaming agent is within such a range, chemical foaming and vulcanization are easily controlled, and in a foamed product, the shrinkage rate is easily reduced and excellent appearance is easily obtained.

The content of the chemical foaming agent is 3 to 16 parts by mass with respect to the total of 100 parts by mass of the sulfur-modified chloroprene rubber, the thiazole compound, and the dithiocarbamic acid-based compound. When the content of the chemical foaming agent is less than 3 parts by mass, since the amount of the foaming agent is insufficient, a decomposition gas amount sufficient for obtaining a foamed product may not be obtained in some cases. When the content of the chemical foaming agent is more than 16 parts by mass, a balance between foaming and vulcanization is difficult to be achieved, and the appearance or the tear strength of a foamed product to be obtained may be poor in some cases.

The content of the chemical foaming agent is preferably in the following range with respect to the total of 100 parts by mass of the sulfur-modified chloroprene rubber, the thiazole compound, and the dithiocarbamic acid-based compound. The content of the chemical foaming agent is preferably 0.1 parts by mass or more, 0.5 parts by mass or more, 1 part by mass or more, 3 parts by mass or more, 4 parts by mass or more, 5 parts by mass or more, 6 parts by mass or more, 6.5 parts by mass or more, 7 parts by mass or more, or 8 parts by mass or more, from the viewpoint of easily improving a tear strength, easily reducing a shrinkage rate, and easily obtaining excellent appearance, in a foamed product. The content of the chemical foaming agent is preferably 20 parts by mass or less, 18 parts by mass or less, 15 parts by mass or less, 12 parts by mass or less, 10 parts by mass or less, less than 10 parts by mass, 9 parts by mass or less, or 8 parts by mass or less, from the viewpoint of easily improving a tear strength, easily reducing a shrinkage rate, and easily obtaining excellent appearance, in a foamed product. The content of the chemical foaming agent may be 7 parts by mass or less, 6.5 parts by mass or less, 6 parts by mass or less, or 5 parts by mass or less. From these viewpoints, the content of the chemical foaming agent is preferably 0.1 to 20 parts by mass, 0.1 parts by mass or more and less than 10 parts by mass, 1 to 15 parts by mass, 3 to 15 parts by mass, 5 to 15 parts by mass, 6 to 15 parts by

mass, 7 to 15 parts by mass, 8 to 15 parts by mass, 3 to 12 parts by mass, 3 to 10 parts by mass, 3 to 8 parts by mass, 3 to 7 parts by mass, or 3 to 6 parts by mass.

The rubber foam composition of the present embodiment may contain an unreacted molecular weight adjustor (such as a thiazole compound or a dithiocarbamic acid-based compound). As the molecular weight adjustor, the molecular weight adjustor mentioned above relating to the molecular weight adjustment step can be used.

The content of the thiazole compound (the total amount of compounds corresponding to a thiazole compound; for example, the residual amount) in the rubber foam composition of the present embodiment is preferably in the following range with respect to 100 parts by mass of the sulfur-modified chloroprene rubber. Furthermore, the content of a specific thiazole compound (for example, each thiazole compound exemplified as mentioned above; such as N-cyclohexyl-2-benzothiazole sulfenamide or N-cyclohexyl-4-methyl-2-benzothiazole sulfenamide) in the rubber foam composition of the present embodiment is preferably in the following range with respect to 100 parts by mass of the sulfur-modified chloroprene rubber. The content of the thiazole compound (for example, the residual amount of an unreacted thiazole compound) can be adjusted by the amount of the thiazole compound used in the molecular weight adjustment step, the treatment time and the treatment temperature of the molecular weight adjustment step, and the like.

The content of the thiazole compound is preferably 0.0001 parts by mass or more, 0.0003 parts by mass or more, 0.0004 parts by mass or more, 0.0005 parts by mass or more, 0.0006 parts by mass or more, 0.0010 parts by mass or more, 0.0015 parts by mass or more, 0.0020 parts by mass or more, 0.0025 parts by mass or more, 0.0030 parts by mass or more, 0.0031 parts by mass or more, 0.0035 parts by mass or more, 0.0040 parts by mass or more, 0.0045 parts by mass or more, 0.0050 parts by mass or more, 0.0052 parts by mass or more, 0.0055 parts by mass or more, 0.0060 parts by mass or more, 0.0070 parts by mass or more, 0.0080 parts by mass or more, 0.0090 parts by mass or more, 0.0100 parts by mass or more, or 0.0110 parts by mass or more, from the viewpoint of easily reducing a shrinkage rate in a foamed product. The content of the thiazole compound is preferably 0.0200 parts by mass or less, 0.0150 parts by mass or less, 0.0110 parts by mass or less, 0.0100 parts by mass or less, 0.0090 parts by mass or less, 0.0080 parts by mass or less, 0.0070 parts by mass or less, 0.0060 parts by mass or less, 0.0055 parts by mass or less, 0.0052 parts by mass or less, 0.0050 parts by mass or less, 0.0045 parts by mass or less, 0.0040 parts by mass or less, 0.0035 parts by mass or less, 0.0031 parts by mass or less, 0.0030 parts by mass or less, 0.0025 parts by mass or less, 0.0020 parts by mass or less, 0.0015 parts by mass or less, 0.0010 parts by mass or less, 0.0006 parts by mass or less, 0.0005 parts by mass or less, or 0.0004 parts by mass or less, from the viewpoint of easily improving a tear strength in a foamed product. From these viewpoints, the content of the thiazole compound is preferably 0.0001 to 0.0200 parts by mass, 0.0004 to 0.0150 parts by mass, 0.0004 to 0.0100 parts by mass, 0.0004 to 0.0060 parts by mass, 0.0004 to 0.0040 parts by mass, 0.0004 to 0.0020 parts by mass, 0.0005 to 0.0150 parts by mass, 0.0030 to 0.0150 parts by mass, 0.0050 to 0.0150 parts by mass, 0.0070 to 0.0150 parts by mass, 0.0005 to 0.0100 parts by mass, 0.0005 to 0.0060 parts by mass, 0.0005 to 0.0040 parts by mass, 0.0005 to 0.0020 parts by mass, 0.0030 to 0.0100 parts by mass, 0.0050 to 0.0100 parts by mass, or 0.0070 to 0.0100 parts by mass.

The content of the dithiocarbamic acid-based compound (the total amount of compounds corresponding to a dithiocarbamic acid-based compound; for example, the residual amount) in the rubber foam composition of the present embodiment may be in the following range with respect to 100 parts by mass of the sulfur-modified chloroprene rubber, from the viewpoint of adjusting a balance between a tear strength and a shrinkage rate in a foamed product. Furthermore, the content of a specific dithiocarbamic acid-based compound (for example, each dithiocarbamic acid-based compound exemplified as mentioned above; such as tetrabenzylthiuram disulfide or tetrakis(2-ethylhexyl)thiuram disulfide) in the rubber foam composition of the present embodiment may be in the following range with respect to 100 parts by mass of the sulfur-modified chloroprene rubber, from the viewpoint of adjusting a balance between a tear strength and a shrinkage rate in a foamed product. The content of the dithiocarbamic acid-based compound (for example, the residual amount of an unreacted dithiocarbamic acid-based compound) can be adjusted by the amount of the dithiocarbamic acid-based compound used in the molecular weight adjustment step, the treatment time and the treatment temperature of the molecular weight adjustment step, and the like.

The content of the dithiocarbamic acid-based compound may be 2.50 parts by mass or less, 2.00 parts by mass or less, 1.80 parts by mass or less, 1.70 parts by mass or less, 1.50 parts by mass or less, 1.40 parts by mass or less, 1.37 parts by mass or less, 1.35 parts by mass or less, 1.30 parts by mass or less, 1.20 parts by mass or less, 1.10 parts by mass or less, 1.00 part by mass or less, 0.90 parts by mass or less, 0.80 parts by mass or less, 0.70 parts by mass or less, 0.60 parts by mass or less, 0.50 parts by mass or less, 0.45 parts by mass or less, or 0.42 parts by mass or less. The content of the dithiocarbamic acid-based compound may be 0 parts by mass or more, more than 0 parts by mass, 0.01 parts by mass or more, 0.05 parts by mass or more, 0.10 parts by mass or more, 0.20 parts by mass or more, 0.30 parts by mass or more, 0.40 parts by mass or more, 0.42 parts by mass or more, 0.45 parts by mass or more, 0.50 parts by mass or more, 0.60 parts by mass or more, 0.70 parts by mass or more, 0.80 parts by mass or more, 0.90 parts by mass or more, 1.00 part by mass or more, 1.10 parts by mass or more, 1.20 parts by mass or more, 1.30 parts by mass or more, 1.35 parts by mass or more, 1.37 parts by mass or more, 1.40 parts by mass or more, 1.50 parts by mass or more, 1.70 parts by mass or more, 1.80 parts by mass or more, or 2.00 parts by mass or more. From

these viewpoints, the content of the dithiocarbamic acid-based compound may be 0 to 2.50 parts by mass, more than 0 parts by mass and 2.50 parts by mass or less, 0 to 2.00 parts by mass, more than 0 parts by mass and 2.00 parts by mass or less, 0 to 1.70 parts by mass, more than 0 parts by mass and 1.70 parts by mass or less, 0 to 1.35 parts by mass, more than 0 parts by mass and 1.35 parts by mass or less, 0 to 1.00 part by mass, more than 0 parts by mass and 1.00 part by mass or less, 0.40 to 1.70 parts by mass, 0.80 to 1.70 parts by mass, 1.00 to 1.70 parts by mass, 0.40 to 1.35 parts by mass, or 0.40 to 1.00 part by mass.

In the rubber foam composition of the present embodiment, a mass ratio D/C of a content (for example, residual amount) D of the dithiocarbamic acid-based compound with respect to a content (for example, residual amount) C of the thiazole compound is preferably in the following range. The mass ratio D/C is preferably 2500 or less, 2300 or less, or 2000 or less, from the viewpoint that a physical property balance between a tear strength and a shrinkage rate of a foamed product is preferable. The mass ratio D/C may be 1800 or less, 1600 or less, 1500 or less, 1200 or less, 1000 or less, 800 or less, 700 or less, 600 or less, 500 or less, 400 or less, 300 or less, 200 or less, 150 or less, 130 or less, 120 or less, 110 or less, 100 or less, 80 or less, 50 or less, 30 or less, or 10 or less, from the viewpoint of adjusting a balance between a tear strength and a shrinkage rate in a foamed product. The mass ratio D/C is 0 or more, and from the viewpoint of adjusting a balance between a tear strength and a shrinkage rate in a foamed product, may be more than 0 and may be 5 or more, 10 or more, 30 or more, 50 or more, 80 or more, 100 or more, 110 or more, 120 or more, 130 or more, 150 or more, 200 or more, 300 or more, 400 or more, 500 or more, 600 or more, 700 or more, 800 or more, 1000 or more, 1200 or more, 1500 or more, 1600 or more, 1800 or more, or 2000 or more. From these viewpoints, the mass ratio D/C may be 0 to 2500, more than 0 and 2500 or less, 0 to 2000, more than 0 and 2000 or less, 0 to 1500, 0 to 1000, 0 to 300, 0 to 130, 100 to 2500, 130 to 2500, or 1000 to 2500.

The content of the thiazole compound and the content of the dithiocarbamic acid-based compound can be quantified by the procedure described in Examples. The relative amount of the thiazole compound with respect to the sulfur-modified chloroprene rubber and the relative amount of the dithiocarbamic acid-based compound with respect to the sulfur-modified chloroprene rubber may be maintained equivalently before and after mixing components other than the sulfur-modified chloroprene rubber, the thiazole compound, and the dithiocarbamic acid-based compound with respect to a mixture of the sulfur-modified chloroprene rubber, the thiazole compound, and the dithiocarbamic acid-based compound.

In the rubber foam composition of the present embodiment, the content of a sulfenamide compound may be 0.0005 parts by mass or less, less than 0.0005 parts by mass, 0.0001 parts by mass or less, or 0.00001 parts by mass or less, with respect to 100 parts by mass of the sulfur-modified chloroprene rubber. The rubber foam composition of the present embodiment may not substantially contain a sulfenamide compound (the aforementioned content of the sulfenamide compound may be substantially 0 parts by mass).

In the rubber foam composition of the present embodiment, the content of an organic peroxide may be 1 part by mass or less, less than 1 part by mass, 0.1 parts by mass or less, or 0.01 parts by mass or less, with respect to 100 parts by mass of the sulfur-modified chloroprene rubber. The rubber foam composition of the present embodiment may not substantially contain an organic peroxide (the aforementioned content of the organic peroxide may be substantially 0 parts by mass).

The Mooney viscosity ($ML_{1+4}$, 100°C) of the mixture of the sulfur-modified chloroprene rubber, the thiazole compound, and the dithiocarbamic acid-based compound is not particularly limited, and is preferably in the following range. The Mooney viscosity is preferably 10 or more, 15 or more, 20 or more, 25 or more, or 30 or more, from the viewpoint of easily maintaining the processability. The Mooney viscosity is preferably 90 or less, 85 or less, 80 or less, 75 or less, 70 or less, 65 or less, 60 or less, 55 or less, or 50 or less, from the viewpoint of easily maintaining the processability. From these viewpoints, the Mooney viscosity is preferably 10 to 90 or 20 to 80. The Mooney viscosity can be adjusted by the addition amount of the molecular weight adjustor, the treatment time and the treatment temperature of the molecular weight adjustment step, and the like. The Mooney viscosity of the mixture of the sulfur-modified chloroprene rubber, the thiazole compound, and the dithiocarbamic acid-based compound can be measured by specifying the sulfur-modified chloroprene rubber, the thiazole compound, and the dithiocarbamic acid-based compound contained in the rubber foam composition of the present embodiment.

The rubber foam composition of the present embodiment may contain additives such as a vulcanizing agent, a processing aid (lubricant), an antioxidant, a metal compound, a plasticizer, and a filler.

Examples of the vulcanizing agent include a metal oxide. Examples of the metal oxide include zinc oxide, magnesium oxide, lead oxide, trilead tetraoxide, iron trioxide, titanium dioxide, calcium oxide, and hydrotalcite. The vulcanizing agent may be used alone or in combination of two or more kinds thereof. The content of the vulcanizing agent is preferably 3 to 15 parts by mass with respect to 100 parts by mass of the mixture of the sulfur-modified chloroprene rubber, the thiazole compound, and the dithiocarbamic acid-based compound.

Examples of the processing aid include fatty acids such as stearic acid; paraffin-based processing aids such as polyethylene; and fatty acid amides. The processing aid may be used alone or in combination of two or more kinds thereof. The content of the processing aid is preferably 0.5 to 5 parts by mass with respect to 100 parts by mass of the

mixture of the sulfur-modified chloroprene rubber, the thiazole compound, and the dithiocarbamic acid-based compound.

The rubber foam composition of the present embodiment can contain an antioxidant (for example, a small amount of an antioxidant) for preventing a change in Mooney viscosity during storage. As the antioxidant, one or two or more kinds of known compounds, which can be used in the chloroprene rubber, can be freely selected and used. Examples of the antioxidant include phenyl-α-naphthylamine, octylated diphenylamine, nickel dibutyldithiocarbamate, 2,6-di-tert-butyl-4-phenylphenol, 2,2'-methylenebis(4-methyl-6-tert-butylphenol), and 4,4'-thiobis-(6-tert-butyl-3-methylphenol). The antioxidant is preferably at least one selected from octylated diphenylamine, nickel dibutyldithiocarbamate, and 4,4'-thiobis-(6-tert-butyl-3-methylphenol).

A metal compound is a compound which can be added for adjusting the vulcanization rate of the sulfur-modified chloroprene rubber or suppressing the degradation of the sulfur-modified chloroprene rubber by adsorbing chlorine sources such as hydrogen chloride generated by dehydrochlorination reaction of the sulfur-modified chloroprene rubber. As the metal compound, oxides, hydroxides, or the like of zinc, titanium, magnesium, lead, iron, beryllium, calcium, barium, germanium, zirconium, vanadium, molybdenum, tungsten, or the like can be used. The metal compound may be used alone or in combination of two or more kinds thereof.

The content of the metal compound is not particularly limited, and is preferably in a range of 3 to 15 parts by mass with respect to 100 parts by mass of the mixture of the sulfur-modified chloroprene rubber, the thiazole compound, and the dithiocarbamic acid-based compound. When the content of the metal compound is adjusted to this range, the mechanical strength of a molded article can be improved.

A plasticizer is a component which can be added for lowering the hardness of the sulfur-modified chloroprene rubber and improving low-temperature properties thereof. Furthermore, when a sponge is produced using the sulfur-modified chloroprene rubber, the texture of the sponge can also be improved. Examples of the plasticizer include dioctyl phthalate, dioctyl adipate {also known as bis(2-ethylhexyl) adipate}, white oils, silicone oils, naphthene oils, aroma oils, triphenyl phosphate, and tricresyl phosphate. The plasticizer may be used alone or in combination of two or more kinds thereof.

The content of the plasticizer is not particularly limited, and is preferably in a range of 50 parts by mass or less with respect to 100 parts by mass of the mixture of the sulfur-modified chloroprene rubber, the thiazole compound, and the dithiocarbamic acid-based compound. When the content of the plasticizer is adjusted to this range, the aforementioned effect of the plasticizer can be exhibited while maintaining the tear strength of a molded article.

A filler is a component which can be added as a reinforcing agent for the sulfur-modified chloroprene rubber. Examples of the filler include carbon black, silica, clay, talc, and calcium carbonate. The filler may be used alone or in combination of two or more kinds thereof.

<Foamed product and molded article>

A foamed product of the present embodiment is a foamed product of the rubber foam composition of the present embodiment. The foamed product of the present embodiment may be a vulcanizate and may be a sponge. The foamed product of the present embodiment can be obtained by foaming the rubber foam composition of the present embodiment, and can be obtained, for example, by mixing constituents (such as the sulfur-modified chloroprene rubber, the chemical foaming agent, the metal compound, the plasticizer, and the filler) of the rubber foam composition with a roll, a banbury mixer, an extruder, or the like, adding a foaming agent, and then performing vulcanization while foaming.

After the foamed product of the present embodiment is subjected to slice processing into a desired thickness to obtain a foamed sheet, a laminate sheet may be obtained by stacking (laminating) a fiber base material (for example, a jersey fabric of polyester fibers, nylon fibers, or the like) on at least one surface of the foamed sheet. The laminate sheet of the present embodiment includes the foamed product of the present embodiment and a fiber base material supporting this foamed product, and the foamed product has a sheet shape. The laminate sheet of the present embodiment can be used as a fabric for a wet suit, and a wet suit can be obtained by sewing the laminate sheet.

A molded article of the present embodiment is a molded article (for example, a sponge product) made of the foamed product of the present embodiment and can be obtained by molding the foamed product of the present embodiment. Examples of the molded article include a wet suit. For a constituent material for the wet suit, in order to improve product reliability, a material excellent in a tear strength, shrinkage property, appearance, and the like is required. A wet suit that is an aspect of the molded article of the present embodiment has a high tear strength, a small shrinkage rate, and excellent appearance as compared to a conventional wet suit using a sulfur-modified chloroprene rubber.

## Examples

Hereinafter, the present invention will be more specifically described on the basis of Examples. Examples described below are only typical exemplary Examples of the present invention and the scope of the present invention is not restricted thereby at all.

<Preparation of evaluation sample>

(Example 1)

[Preparation of sulfur-modified chloroprene rubber]

To a polymerization tank having an inner volume of 30 L, 100 parts by mass of chloroprene, 0.55 parts by mass of sulfur, 120 parts by mass of pure water, 4.00 parts by mass of disproportionated potassium rosinate (manufactured by Harima Chemicals, Inc.), 0.60 parts by mass of sodium hydroxide, and 0.6 parts by mass of a sodium salt of β-naphthalene sulfonic acid formalin condensate (manufactured by Kao Corporation, trade name "DEMOL N") were added. The pH of the aqueous emulsion before polymerization initiation was 12.8. 0.1 parts by mass of potassium persulfate was added as a polymerization initiator, and then emulsion polymerization was performed under a nitrogen flow at a polymerization temperature of 40°C. 0.05 parts by mass of diethylhydroxylamine as a polymerization terminator was added at the time point of a conversion rate of 85% to terminate the polymerization, thereby obtaining a polymer solution of chloroprene.

To the polymer solution thus obtained, 5 parts by mass of chloroprene (solvent), 1 part by mass of N-cyclohexyl-2-benzothiazole sulfenamide (molecular weight adjustor, manufactured by OUCHI SHINKO CHEMICAL INDUSTRIAL CO., LTD., trade name "NOCCELER CZ"), 4 parts by mass of tetrabenzylthiuram disulfide (molecular weight adjustor, manufactured by OUCHI SHINKO CHEMICAL INDUSTRIAL CO., LTD., trade name "NOCCELER TBzTD"), 0.05 parts by mass of a sodium salt of β-naphthalene sulfonic acid formalin condensate (dispersant), and 0.05 parts by mass of sodium laurylsulfate (emulsifier) were added, thereby obtaining a sulfur-modified chloroprene polymer latex before molecular weight adjustment.

The sulfur-modified chloroprene polymer latex thus obtained was distilled under reduced pressure to remove unreacted monomers, and then the molecular weight thereof was adjusted at a temperature of 50°C for 1 hour under stirring, thereby obtaining a crude rubber (latex after molecular weight adjustment) containing the sulfur-modified chloroprene rubber. The "crude rubber" is a mixture containing the sulfur-modified chloroprene rubber and the unreacted molecular weight adjustor.

{Analysis of content of terminal functional group}

The crude rubber was cooled, and then the polymer was isolated by a common freeze-solidification method to obtain a sulfur-modified chloroprene rubber. On the basis of the total amount of the sulfur-modified chloroprene rubber, the content of the terminal functional group derived from N-cyclohexyl-2-benzothiazole sulfenamide represented by Formula (A1) below (thiazole terminal species A1) was 0.13% by mass, and the content of the terminal functional group derived from tetrabenzylthiuram disulfide represented by Formula (B1) below (dithiocarbamic acid terminal species B1) was 0.29% by mass.

[Chemical Formula 6]

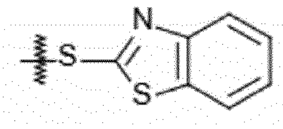

(A1)

[Chemical Formula 7]

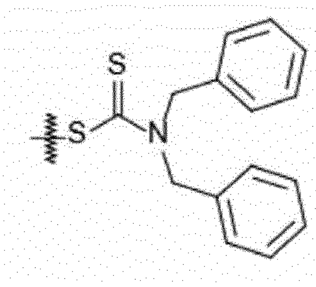

(B1)

The content of the terminal functional group in the sulfur-modified chloroprene rubber was quantified by the following procedure. First, the sulfur-modified chloroprene rubber was purified with benzene and methanol and then freeze-dried again to obtain a sample for measurement. $^1$H-NMR measurement was performed using this sample for measurement according to JIS K-6239. The measurement data thus obtained were corrected on the basis of the peak (7.24 ppm) of chloroform in deuterated chloroform used as a solvent. On the basis of the corrected measurement data, the area of respective peaks having peak tops at 7.72 to 7.83 ppm was calculated to quantify the content of the terminal functional group (thiazole terminal species), and the area of peaks having peak tops at 5.05 to 5.50 ppm was calculated to quantify the content of the terminal functional group (dithiocarbamic acid terminal species).

{Measurement of residual amount of molecular weight adjustor}

The content (residual amount) of the molecular weight adjustor in the aforementioned crude rubber with respect to 100 parts by mass of the sulfur-modified chloroprene rubber was quantified by the following procedure. First, 1.5 g of the crude rubber thus obtained was dissolved in 30 mL of benzene, and then 60 mL of methanol was added dropwise thereto. Thereby, the rubber component (polymer component) was precipitated and separated from the solvent, and the liquid phase containing a non-rubber component as a solvent-soluble component was recovered. Dissolving with benzene and dropwise addition of methanol were performed again with respect to the precipitate by the same procedures, and thereby the rubber component was separated and the liquid phase containing a non-rubber component as a solvent-soluble component was recovered. The first and second liquid phases were mixed and then fixed to a constant volume of 200 mL to obtain a liquid as a sample for measurement. 20 μL of this sample for measurement was injected to a liquid chromatograph (LC, manufactured by Hitachi, Ltd., pump: L-6200, L-600, UV detector: L-4250). The mobile phase of the liquid chromatograph was used while changing the ratio of acetonitrile and water, and was flowed at a flow rate of 1 mL/min. As a column, Inertsil ODS-3 (ϕ4.6 × 150 mm, 5 μm, manufactured by GL Sciences Inc.) was used. The peak detection time was checked using 0.05 ppm, 0.1 ppm, and 1.0 ppm of standard solutions of the thiazole compound (measurement wavelength: 300 nm) and 10 ppm, 50 ppm, and 100 ppm of standard solutions of the dithiocarbamic acid-based compound (measurement wavelength: 280 nm), and a quantitative value was obtained by a standard curve obtained from the peak area thereof. By comparison between this quantitative value and the amount of the sample used in analysis, the contents of the unreacted thiazole compound and the unreacted dithiocarbamic acid-based compound in the crude rubber were obtained.

[Preparation of sample]

100 parts by mass of the aforementioned crude rubber, 1 part by mass of a processing aid 1 (lubricant, manufactured by New Japan Chemical Co., Ltd., trade name "Stearic acid 50S"), 2 parts by mass of a processing aid 2 (lubricant, manufactured by S&S Japan Co., LTD., trade name "Struktol WB212"), 1 part by mass of a processing aid 3 (manufactured by Nippon Seiro Co., Ltd., trade name "Paraffin wax 130°F"), 1 part by mass of an antioxidant 1 (manufactured by OUCHI SHINKO CHEMICAL INDUSTRIAL CO., LTD., trade name "NOCRAC AD-F", octylated diphenylamine), 1 part by mass of an antioxidant 2 (manufactured by OUCHI SHINKO CHEMICAL INDUSTRIAL CO., LTD., trade name "NOCRAC NBC", nickel dibutyldithiocarbamate), 4 parts by mass of magnesium oxide (manufactured by Kyowa Chemical Industry Co., Ltd., trade name "Kyowamag 150"), 10 parts by mass of a filler 1 (manufactured by Asahi Carbon Co., Ltd., trade name "Asahi Thermal", carbon black), 10 parts by mass of a filler 2 (manufactured by Shiraishi Calcium Kaisha, Ltd., trade name "DIXIE CLAY"), 15 parts by mass of a filler 3 (manufactured by Shiraishi Calcium Kaisha, Ltd., trade name "CROWN CLAY"), 15 parts by mass of a plasticizer 1 (manufactured by Idemitsu Kosan Co., Ltd., trade name "NP-24", naphthenic mineral oil), 20 parts by mass of a plasticizer 2 (manufactured by Idemitsu Kosan Co., Ltd., trade name "AH-16", aromatic process oil), 5 parts by mass of a vulcanizing agent (manufactured by SAKAI CHEMICAL INDUSTRY CO., LTD., Zinc oxide II), and 8 parts by mass of a foaming agent 1 (manufactured by SANKYO KASEI CO., LTD., trade name "Cellmic S", p,p'-oxybisbenzenesulfonylhydrazide) were mixed using an 8-inch roll to obtain an unvulcanized compound. Next, this unvulcanized compound was subjected to press vulcanization described below twice according to JIS K 6299, thereby preparing an evaluation sample (sponge).

102 g (filling rate: 105%) of the unvulcanized compound was placed in a mold having a cavity region with a length of 100 mm, a width of 95 mm, and a height of 8 mm, and the cavity region was subjected to primary vulcanization (first press vulcanization) for 20 minutes under the conditions of a pressure of 3.5 MPa or more and 145°C. Thereafter, under the atmospheric pressure, the mold was left to stand still for 10 minutes under the condition of 23°C to obtain a primary vulcanized compound. Then, this primary vulcanized compound was placed in a mold having a cavity region with a length of 175 mm, a width of 170 mm, and a height of 16 mm, and the cavity region was subjected to secondary vulcanization (second press vulcanization) for 20 minutes under the conditions of a pressure of 3.5 MPa or more and 155°C.

(Example 2)

An evaluation sample was obtained by the same method as in Example 1, except that, as a molecular weight adjustor, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 8 parts by mass.

(Example 3)

An evaluation sample was obtained by the same method as in Example 1, except that, as a molecular weight adjustor, the addition amount of N-cyclohexyl-2-benzothiazole sulfenamide was changed from 1 part by mass to 2 parts by mass, and the addition amount of tetrabenzylthiuram disulfide was changed from 4 parts by mass to 2 parts by mass.

(Example 4)

An evaluation sample was obtained by the same method as in Example 1, except that, as a molecular weight adjustor, the addition amount of N-cyclohexyl-2-benzothiazole sulfenamide was changed from 1 part by mass to 3 parts by mass, and the addition amount of tetrabenzylthiuram disulfide was changed from 4 parts by mass to 2 parts by mass.

(Example 5)

An evaluation sample was obtained by the same method as in Example 1, except that, as a molecular weight adjustor, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 2 parts by mass.

(Example 6)

An evaluation sample was obtained by the same method as in Example 1, except that, as a molecular weight adjustor, the addition amount of N-cyclohexyl-2-benzothiazole sulfenamide was changed from 1 part by mass to 3 parts by mass, and tetrabenzylthiuram disulfide was not added.

(Example 7)

A crude rubber was obtained by the same method as in Example 1, except that, as a molecular weight adjustor, the addition amount of N-cyclohexyl-2-benzothiazole sulfenamide was changed from 1 part by mass to 0.3 parts by mass, and the addition amount of tetrabenzylthiuram disulfide was changed from 4 parts by mass to 8 parts by mass.

(Example 8)

An evaluation sample was obtained by the same method as in Example 1, except that the addition amount of N-cyclohexyl-2-benzothiazole sulfenamide as a molecular weight adjustor was changed from 1 part by mass to 0.3 parts by mass, and the treatment time during molecular weight adjustment was changed from 1 hour to 3 hours.

(Example 9)

An evaluation sample was obtained by the same method as in Example 1, except that the addition amount of N-cyclohexyl-2-benzothiazole sulfenamide as a molecular weight adjustor was changed from 1 part by mass to 1.5 parts by mass, and the treatment time during molecular weight adjustment was changed from 1 hour to 15 minutes.

(Example 10)

An evaluation sample was obtained by the same method as in Example 1, except that the addition amount of tetrabenzylthiuram disulfide as a molecular weight adjustor was changed from 4 parts by mass to 8 parts by mass, and the treatment time during molecular weight adjustment was changed from 1 hour to 15 minutes.

(Example 11)

An evaluation sample was obtained by the same method as in Example 1, except that, as a molecular weight adjustor, N-cyclohexyl-2-benzothiazole sulfenamide was changed to N-cyclohexyl-4-methyl-2-benzothiazole sulfenamide providing a terminal functional group represented by Formula (A2) below (manufactured by Chemieliva pharma & Chem Co., LTD.). On the basis of the total amount of the sulfur-modified chloroprene rubber, the content of the terminal functional group derived from N-cyclohexyl-4-methyl-2-benzothiazole sulfenamide (thiazole terminal species A2) was 0.15% by mass, and the content of the terminal functional group derived from tetrabenzylthiuram disulfide represented by Formula (B1) mentioned above (dithiocarbamic acid terminal species B1) was 0.33% by mass.

[Chemical Formula 8]

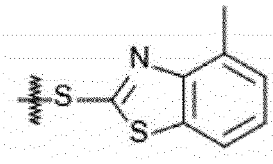
(A2)

(Example 12)

An evaluation sample was obtained by the same method as in Example 1, except that, as a molecular weight adjustor, tetrabenzylthiuram disulfide was changed to tetrakis(2-ethylhexyl)thiuram disulfide providing a terminal functional group represented by Formula (B2) below (manufactured by OUCHI SHINKO CHEMICAL INDUSTRIAL CO., LTD., trade name "NOCCELER TOT-N"). On the basis of the total amount of the sulfur-modified chloroprene rubber, the content of the terminal functional group derived from N-cyclohexyl-2-benzothiazole sulfenamide represented by Formula (A1) mentioned above (thiazole terminal species A1) was 0.16% by mass, and the content of the terminal functional group derived from tetrakis(2-ethylhexyl)thiuram disulfide (dithiocarbamic acid terminal species B2) was 0.25% by mass.

[Chemical Formula 9]

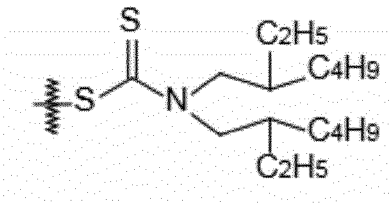
(B2)

(Example 13)

An evaluation sample was obtained by the same method as in Example 1, except that, as a molecular weight adjustor, N-cyclohexyl-2-benzothiazole sulfenamide was changed to N-cyclohexyl-4-methyl-2-benzothiazole sulfenamide providing a terminal functional group represented by Formula (A2) mentioned above, and tetrabenzylthiuram disulfide was changed to tetrakis(2-ethylhexyl)thiuram disulfide providing a terminal functional group represented by Formula (B2) mentioned above. On the basis of the total amount of the sulfur-modified chloroprene rubber, the content of the terminal functional group derived from N-cyclohexyl-4-methyl-2-benzothiazole sulfenamide (thiazole terminal species A2) was 0.14% by mass, and the content of the terminal functional group derived from tetrakis(2-ethylhexyl)thiuram disulfide (dithiocarbamic acid terminal species B2) was 0.32% by mass.

(Example 14)

An evaluation sample was obtained by the same method as in Example 1, except that 8 parts by mass of the foaming agent 1 was changed to 5 parts by mass of a foaming agent 2 (manufactured by SANKYO KASEI CO., LTD., trade name "Cellmic C", azodicarbonamide).

(Example 15)

An evaluation sample was obtained by the same method as in Example 1, except that 8 parts by mass of the foaming agent 1 was changed to 4 parts by mass of the foaming agent 1 and 2.5 parts by mass of the foaming agent 2 (manufactured by SANKYO KASEI CO., LTD., trade name "Cellmic C", azodicarbonamide).

(Comparative Example 1)

An evaluation sample was obtained by the same method as in Example 1, except that, as a molecular weight adjustor, the addition amount of N-cyclohexyl-2-benzothiazole sulfenamide was changed from 1 part by mass to 3 parts by mass, and the addition amount of tetrabenzylthiuram disulfide was changed from 4 parts by mass to 12 parts by mass.

(Comparative Example 2)

An evaluation sample was obtained by the same method as in Example 1, except that, as a molecular weight adjustor, the addition amount of N-cyclohexyl-2-benzothiazole sulfenamide was changed from 1 part by mass to 0.3 parts by mass, and the addition amount of tetrabenzylthiuram disulfide was changed from 4 parts by mass to 0.5 parts by mass.

(Comparative Example 3)

An evaluation sample was obtained by the same method as in Example 1, except that, as a molecular weight adjustor, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 12 parts by mass.

(Comparative Example 4)

An evaluation sample was obtained by the same method as in Example 1, except that, as a molecular weight adjustor, N-cyclohexyl-2-benzothiazole sulfenamide and tetrabenzylthiuram disulfide were changed to tetraethylthiuram disulfide (manufactured OUCHI SHINKO CHEMICAL INDUSTRIAL CO., LTD., trade name "NOCCELER TET") providing a terminal functional group represented by formula below, and the addition amount thereof was changed to 2.5 parts by mass. On the basis of the total amount of the sulfur-modified chloroprene rubber, the content of the terminal functional group derived from tetraethylthiuram disulfide was 0.26% by mass.

[Chemical Formula 10]

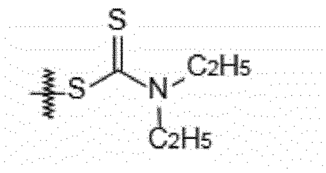

(Comparative Example 5)

An evaluation sample was obtained by the same method as in Example 1, except that the addition amount of the foaming agent 1 was changed from 8 parts by mass to 2 parts by mass.

(Comparative Example 6)

An evaluation sample was obtained by the same method as in Example 1, except that the addition amount of the foaming agent 1 was changed from 8 parts by mass to 20 parts by mass.

<Evaluation>

The crude rubber and the evaluation sample (foamed product) mentioned above were evaluated. Results of

Examples are shown in Table 1 and Table 2, and results of Comparative Examples are shown in Table 3. In Comparative Example 1, since the Mooney viscosity of the crude rubber was too low so that an evaluation sample could not be prepared, each evaluation was not performed. In Comparative Example 5, since foaming could not be performed so that an evaluation sample could not be prepared, each evaluation was not performed.

(Mooney viscosity)

Regarding the aforementioned crude rubber, the Mooney viscosity ($ML_{1+4}$) was measured according to JIS K 6300-1 under conditions of a type-L-rotor-preheating time of 1 minute, a rotation time of 4 minutes, and a test temperature of 100°C. The Mooney viscosity of the crude rubber of Comparative Example 1 was too low and thus was unmeasurable.

(Tear strength)

A No. 4 unnicked angle-type test piece was prepared from the aforementioned evaluation sample by using a punching jig according to JIS K 6400-1. Thereafter, measurement was performed using a constant rate tensile tester at a testing rate of 500 mm/min according to JIS K6400-5, and the tear strength was obtained by dividing the maximum tearing load shown until the test piece was broken by the film thickness.

(Shrinkage rate)

The aforementioned evaluation sample (the evaluation sample immediately after preparation) was left to stand still for 168 hours under the atmospheric pressure under the condition of 23°C, and the surface layer of the evaluation sample was sliced into a thickness of 2 mm ± 0.20 mm, thereby preparing a sponge sheet. The horizontal and vertical size of the sponge sheet immediately after slicing was measured to be obtained as a reference value, and then the horizontal and vertical size of the sponge sheet when left to stand still for 168 hours under the atmospheric pressure under the condition of 23°C was measured again. A vertical length and a horizontal length of the sponge sheet immediately after slicing were designated as H0 (mm) and L0 (mm), respectively, a vertical length and a horizontal length of the sponge sheet after being left to stand still for 168 hours were designated as H1 (mm) and L1 (mm), and then the shrinkage rate was calculated from the following expression.

$$\text{Shrinkage rate (\%)} = [(H0 \times L0 - H1 \times L1) \div (H0 \times L0)] \times 100$$

(Appearance)

The aforementioned evaluation sample (the evaluation sample immediately after preparation) was left to stand still for 24 hours under the atmospheric pressure under the condition of 23°C, and the surface state of the evaluation sample was observed by visual inspection. The observation was performed for the following three items, a case where all items were in the condition of "A" was evaluated as "A", and a case where at least one item was not in the condition of "A" was evaluated as "B".

[Item 1: Presence or absence of crater]

The presence or absence of crater-like irregularity generated by the release of a gas, or the like, was checked. A case where irregularity was not confirmed at all was evaluated as "A".

[Item 2: Presence or absence of fingernail mark]

The presence or absence of a fingernail mark when the surface of the evaluation sample was lightly depressed straight with a fingernail and then released was observed. A case where the fingernail mark did not remain at all was evaluated as "A".

[Item 3: Observation of corner part]

For a corner part (corner) of the evaluation sample, the wrinkle state due to shrinkage was checked. A case where the corner surely remained was evaluated as "A".

[Table 1]

| | | | Unit | Example 1 | Example 2 | Example 3 | Example 4 | Example 5 | Example 6 | Example 7 |
|---|---|---|---|---|---|---|---|---|---|---|
| Content of terminal functional group in sulfur-modified chloroprene rubber | Terminal functional group A | Thiazole terminal species A1 | % by mass | 0.13 | 0.07 | 0.23 | 0.42 | 0.12 | 0.38 | 0.04 |
| | | Thiazole terminal species A2 | | - | - | - | - | - | - | - |
| | Terminal functional group B | Dithiocarbamic acid terminal species B1 | | 0.29 | 0.59 | 0.14 | 0.23 | 0.12 | - | 0.47 |
| | | Dithiocarbamic acid terminal species B2 | | - | - | - | - | - | - | - |
| | B/A | | - | 2.23 | 8.43 | 0.61 | 0.55 | 1.00 | 0 | 11.75 |
| | A + B | | % by mass | 0.42 | 0.66 | 0.37 | 0.65 | 0.24 | 0.38 | 0.51 |
| Content of unreacted molecular weight adjustor with respect to 100 parts by mass of sulfur-modified chloroprene rubber | Thiazole (C) | N-Cyclohexyl-2-benzothiazole sulfenamide | parts by mass | 0.0052 | 0.0011 | 0.0048 | 0.0076 | 0.0031 | 0.0085 | 0.0006 |
| | | N-Cyclohexyl-4-methyl-2-benzothiazole sulfenamide | | - | - | - | - | - | - | - |
| | Dithiocarbamic acid-based compound (D) | Tetrabenzylthiuram disulfide | | 1.02 | 1.62 | 0.48 | 0.88 | 0.42 | - | 1.37 |
| | | Tetrakis(2-ethylhexyl) thiuram disulfide | | - | - | - | - | - | - | - |
| | D/C | | - | 196 | 1473 | 100 | 116 | 135 | 0 | 2283 |
| Mooney viscosity ($ML_{1+4}$ at 100°C) of crude rubber | | | - | 51 | 44 | 48 | 18 | 84 | 43 | 55 |
| Content of chemical foaming agent with respect to 100 parts by mass of crude rubber | Foaming agent 1 | | parts by mass | 8 | 8 | 8 | 8 | 8 | 8 | 8 |
| | Foaming agent 2 | | | - | - | - | - | - | - | - |

(continued)

| | | Unit | Example | | | | | | |
|---|---|---|---|---|---|---|---|---|---|
| | | | 1 | 2 | 3 | 4 | 5 | 6 | 7 |
| Evaluation | Tear strength | N/mm | 4.81 | 5.01 | 4.31 | 4.02 | 5.06 | 4.07 | 5.11 |
| | Shrinkage rate | % | 4.5 | 5.1 | 4.2 | 4.0 | 5.3 | 3.9 | 5.2 |
| | Appearance | - | A | A | A | A | A | A | A |

[Table 2]

| | | | Unit | Example | | | | | | | |
|---|---|---|---|---|---|---|---|---|---|---|---|
| | | | | 8 | 9 | 10 | 11 | 12 | 13 | 14 | 15 |
| Content of terminal functional group in sulfur-modified chloroprene rubber | Terminal functional group | Thiazole terminal species A1 | % by mass | 0.08 | 0.38 | 0.11 | - | 0.16 | - | 0.13 | 0.13 |
| | | Thiazole terminal species A2 | | - | - | - | 0.15 | - | 0.14 | - | - |
| | Terminal functional group | Dithiocarbamic acid terminal species B1 | | 0.42 | 0.19 | 0.74 | 0.33 | - | - | 0.29 | 0.29 |
| | | Dithiocarbamic acid terminal species B2 | | - | - | - | - | 0.25 | 0.32 | - | - |
| | B/A | | - | 5.25 | 0.50 | 6.73 | 2.20 | 1.56 | 2.29 | 2.23 | 2.23 |
| | A+B | | % by mass | 0.50 | 0.57 | 0.85 | 0.48 | 0.41 | 0.48 | 0.42 | 0.42 |
| Content of unreacted molecular weight adjustor with respect to 100 parts by mass of sulfur-modified chloroprene rubber | Thiazole (C) | N-Cyclohexyl-2-benzothiazole sulfenamide | parts by mass | 0.0004 | 0.0112 | 0.0068 | - | 0.0046 | - | 0.0052 | 0.0052 |
| | | N-Cyclohexyl-4-methyl-2-benzothiazole sulfenamide | | - | - | - | 0.0044 | - | 0.0032 | - | - |
| | Dithiocarbamic acid-based compound (D) | Tetrabenzylthiuram disulfide | | 0.63 | 1.35 | 2.13 | 1.06 | - | - | 1.02 | 1.02 |
| | | Tetrakis(2-ethylhexyl) thiuram disulfide | | - | - | - | - | 0.88 | 1.12 | - | - |
| | D/C | | - | 1575 | 121 | 313 | 241 | 191 | 350 | 196 | 196 |
| Mooney viscosity ($ML_{1-4}$ at 100°C) of crude rubber | | | - | 59 | 24 | 26 | 48 | 49 | 43 | 51 | 51 |
| Content of chemical foaming agent with respect to 100 parts by mass of crude rubber | Foaming agent 1 | | parts by mass | 8 | 8 | 8 | 8 | 8 | 8 | - | 4 |
| | Foaming agent 2 | | | - | - | - | - | - | - | 5 | 2.5 |

(continued)

| | | Unit | Example | | | | | | | |
|---|---|---|---|---|---|---|---|---|---|---|
| | | | 8 | 9 | 10 | 11 | 12 | 13 | 14 | 15 |
| Evaluation | Tear strength | N/mm | 4.88 | 4.02 | 4.32 | 4.62 | 4.81 | 4.81 | 5.07 | 4.07 |
| | Shrinkage rate | % | 5.2 | 4.2 | 5.1 | 4.4 | 4.7 | 4.6 | 4.1 | 4.2 |
| | Appearance | - | A | A | A | A | A | A | A | A |

[Table 3]

| | | | Unit | Comparative Example | | | | | |
|---|---|---|---|---|---|---|---|---|---|
| | | | | 1 | 2 | 3 | 4 | 5 | 6 |
| Content of terminal functional group in sulfur-modified chloroprene rubber | Terminal functional group A | Thiazole terminal species A1 | % by mass | 0.32 | 0.05 | 0.06 | - | 0.13 | 0.13 |
| | Terminal functional group B | Dithiocarbamic acid terminal species B1 | % by mass | 0.71 | 0.04 | 0.73 | - | 0.29 | 0.29 |
| | Terminal functional group derived from tetraethylthiuram disulfide | | % by mass | - | - | - | 0.26 | - | - |
| | B/A | | - | 2.22 | 0.80 | 12.17 | - | 2.23 | 2.23 |
| | A + B | | % by mass | 1.03 | 0.09 | 0.79 | - | 0.42 | 0.42 |
| Content of unreacted molecular weight adjustor with respect to 100 parts by mass of sulfur-modified chloroprene rubber | Thiazole (C) | N-Cyclohexyl-2-benzothiazole sulfenamide | parts by mass | 0.0074 | 0.0010 | 0.0014 | - | 0.0052 | 0.0052 |
| | Dithiocarbamic acid-based compound (D) | Tetrabenzylthiuram disulfide | parts by mass | 0.84 | 0.14 | 1.44 | - | 1.02 | 1.02 |
| | D/C | | - | 114 | 140 | 1029 | - | 196 | 196 |
| Mooney viscosity ($ML_{1-4}$ at 100°C) of crude rubber | | | - | X | 165 | 23 | 56 | 51 | 51 |
| Content of chemical foaming agent with respect to 100 parts by mass of crude rubber | Foaming agent 1 | | parts by mass | 8 | 8 | 8 | 8 | 2 | 20 |
| Evaluation | Tear strength | | N/mm | - | 6.12 | 5.21 | 3.95 | - | 1.35 |
| | Shrinkage rate | | % | - | 6.3 | 5.5 | 5.5 | - | 5.2 |
| | Appearance | | - | - | B | A | B | - | B |

As shown in Tables 1 to 3, it is confirmed that according to a foamed product obtained using each of the rubber foam compositions of Examples, a foamed product excellent in a tear strength, a shrinkage rate, and appearance is obtainable. In Comparative Example 1, since the Mooney viscosity was too low, an evaluation sample could not be prepared. In Comparative Example 5, since foaming could not be performed, an evaluation sample could not be prepared.

## Claims

1. A rubber foam composition comprising:

   a sulfur-modified chloroprene rubber and a chemical foaming agent, wherein
   the sulfur-modified chloroprene rubber comprises a functional group A represented by General Formula (A) below and positioned at a molecular terminal,
   in the sulfur-modified chloroprene rubber, a mass ratio B/A of a content of a functional group B represented by General Formula (B) below and positioned at a molecular terminal with respect to a content of the functional group A is 12.00 or less,
   a total amount of the functional group A and the functional group B is 0.10 to 1.00% by mass, and
   a content of the chemical foaming agent is 3 to 16 parts by mass with respect to a total of 100 parts by mass of the sulfur-modified chloroprene rubber, a thiazole compound, and a dithiocarbamic acid-based compound.

   [Chemical Formula 1]

   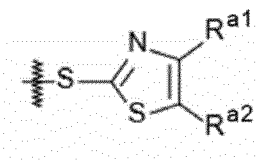

   (A)

   (In the formula, $R^{a1}$ and $R^{a2}$ each independently represent a hydrogen atom, a halogen atom, a hydroxy group, an alkoxy group, a carboxy group, a carboxylate group, a cyano group, an alkyl group which may have a substituent, or an arylthio group which may have a substituent, and $R^{a1}$ and $R^{a2}$ may bond with each other to form a ring which may have a substituent.)

   [Chemical Formula 2]

   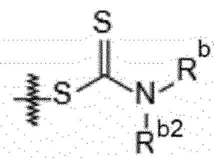

   (B)

   (In the formula, $R^{b1}$ and $R^{b2}$ each independently represent an alkyl group which may have a substituent or an aryl group which may have a substituent.)

2. The rubber foam composition according to claim 1, wherein the mass ratio B/A is more than 0 and 12.00 or less.

3. The rubber foam composition according to claim 1 or 2, wherein the functional group A comprises a benzothiazole ring formed by $R^{a1}$ and $R^{a2}$ bonding with each other.

4. The rubber foam composition according to any one of claims 1 to 3, wherein the number of carbon atoms of at least one selected from $R^{b1}$ and $R^{b2}$ is 7 to 8.

5. The rubber foam composition according to any one of claims 1 to 4, wherein the content of the functional group A in the sulfur-modified chloroprene rubber is 0.05 to 0.40% by mass.

6. The rubber foam composition according to any one of claims 1 to 5, wherein the content of the functional group B

in the sulfur-modified chloroprene rubber is 0.80% by mass or less.

**7.** The rubber foam composition according to any one of claims 1 to 6, wherein a content of the thiazole compound is 0.0005 to 0.0100 parts by mass with respect to 100 parts by mass of the sulfur-modified chloroprene rubber.

**8.** The rubber foam composition according to any one of claims 1 to 7, wherein the thiazole compound comprises at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole.

**9.** The rubber foam composition according to any one of claims 1 to 8, wherein a content of the dithiocarbamic acid-based compound is 2.00 parts by mass or less with respect to 100 parts by mass of the sulfur-modified chloroprene rubber.

**10.** The rubber foam composition according to any one of claims 1 to 9, wherein the dithiocarbamic acid-based compound comprises at least one compound selected from dibenzyl dithiocarbamic acid, sodium dibenzyl dithiocarbamate, potassium dibenzyl dithiocarbamate, zinc dibenzyl dithiocarbamate, ammonium dibenzyl dithiocarbamate, nickel dibenzyl dithiocarbamate, sodium di-2-ethylhexyl dithiocarbamate, potassium di-2-ethylhexyl dithiocarbamate, calcium di-2-ethylhexyl dithiocarbamate, zinc di-2-ethylhexyl dithiocarbamate, ammonium di-2-ethylhexylcarbamate, tetrabenzylthiuram disulfide, and tetrakis(2-ethylhexyl)thiuram disulfide.

**11.** The rubber foam composition according to any one of claims 1 to 10, wherein a mass ratio D/C of a content D of the dithiocarbamic acid-based compound with respect to a content C of the thiazole compound is 2000 or less.

**12.** The rubber foam composition according to any one of claims 1 to 11, wherein a Mooney viscosity of a mixture of the sulfur-modified chloroprene rubber, the thiazole compound, and the dithiocarbamic acid-based compound is 20 to 80.

**13.** The rubber foam composition according to any one of claims 1 to 12, wherein the chemical foaming agent comprises at least one selected from an azo compound, a nitroso compound, a sulfonyl hydrazide compound, an azide compound, and an inorganic foaming agent.

**14.** A foamed product of the rubber foam composition according to any one of claims 1 to 13.

**15.** A molded article made of the foamed product according to claim 14.

## INTERNATIONAL SEARCH REPORT

International application No.
**PCT/JP2021/033385**

**A. CLASSIFICATION OF SUBJECT MATTER**

***C08C 19/20***(2006.01)i; ***C08C 19/22***(2006.01)i; ***C08J 9/06***(2006.01)i
FI: C08J9/06 CEQ; C08C19/20; C08C19/22

According to International Patent Classification (IPC) or to both national classification and IPC

**B. FIELDS SEARCHED**

Minimum documentation searched (classification system followed by classification symbols)

C08C19/00 - 19/44, C08F6/00 - 246/00, C08F301/00, C08J9/00 - 9/42

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/189518 A1 (DENKA COMPANY LTD) 24 September 2020 (2020-09-24) claims, paragraphs [0070]-[0071], [0076], examples | 1-15 |
| Y | JP 2012-213615 A (UBE INDUSTRIES LTD) 08 November 2012 (2012-11-08) claims, paragraphs [0035]-[0038], examples | 1-15 |
| A | JP 10-053756 A (OTSUKA CHEM CO LTD) 24 February 1998 (1998-02-24) entire text | 1-15 |
| A | JP 2007-063450 A (DENKI KAGAKU KOGYO KK, CRK KK) 15 March 2007 (2007-03-15) entire text | 1-15 |
| A | JP 10-298328 A (TOSOH CORP) 10 November 1998 (1998-11-10) entire text | 1-15 |
| A | WO 2020/189517 A1 (DENKA COMPANY LTD) 24 September 2020 (2020-09-24) entire text | 1-15 |
| A | JP 2007-090820 A (HOKUSHIN IND INC) 12 April 2007 (2007-04-12) entire text | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/033385**

**C. DOCUMENTS CONSIDERED TO BE RELEVANT**

| Category* | Citation of document, with indication, where appropriate, of the relevant passages | Relevant to claim No. |
|---|---|---|
| A | WO 2014/148297 A1 (NITTO DENKO CORPORATION) 25 September 2014 (2014-09-25) entire text | 1-15 |
| A | WO 2018/074465 A1 (FUJITA, Masanori) 26 April 2018 (2018-04-26) entire text | 1-15 |
| A | WO 2017/068893 A1 (ELASTOMIX CO LTD) 27 April 2017 (2017-04-27) entire text | 1-15 |
| A | WO 2020/116577 A1 (DENKA COMPANY LTD) 11 June 2020 (2020-06-11) entire text | 1-15 |
| A | JP 2000-170846 A (BANDO CHEM IND LTD) 23 June 2000 (2000-06-23) entire text | 1-15 |
| A | JP 2013-144748 A (DENKI KAGAKU KOGYO KK) 25 July 2013 (2013-07-25) entire text | 1-15 |
| A | WO 2015/177838 A1 (YOKOHAMA RUBBER CO LTD) 26 November 2015 (2015-11-26) entire text | 1-15 |
| A | JP 2019-123852 A (SUMITOMO RUBBER IND) 25 July 2019 (2019-07-25) entire text | 1-15 |
| A | JP 2001-151822 A (MITSUI CHEMICALS INC) 05 June 2001 (2001-06-05) entire text | 1-15 |
| A | US 2020/0190296 A1 (SKINPROTECT CORPORATION SDN BHD) 18 June 2020 (2020-06-18) entire text | 1-15 |
| A | WO 2014/157602 A1 (DENKA COMPANY LTD) 02 October 2014 (2014-10-02) entire text | 1-15 |
| A | WO 2003/072651 A1 (THE UNIVERSITY OF AKRON) 04 September 2003 (2003-09-04) entire text | 1-15 |

Form PCT/ISA/210 (second sheet) (January 2015)

**INTERNATIONAL SEARCH REPORT**
**Information on patent family members**

International application No.
**PCT/JP2021/033385**

| Patent document cited in search report | Publication date (day/month/year) | Patent family member(s) | Publication date (day/month/year) |
|---|---|---|---|
| WO 2020/189518 A1 | 24 September 2020 | (Family: none) | |
| JP 2012-213615 A | 08 November 2012 | (Family: none) | |
| JP 10-053756 A | 24 February 1998 | (Family: none) | |
| JP 2007-063450 A | 15 March 2007 | (Family: none) | |
| JP 10-298328 A | 10 November 1998 | (Family: none) | |
| WO 2020/189517 A1 | 24 September 2020 | (Family: none) | |
| JP 2007-090820 A | 12 April 2007 | (Family: none) | |
| WO 2014/148297 A1 | 25 September 2014 | (Family: none) | |
| WO 2018/074465 A1 | 26 April 2018 | JP 2019-218413 A<br>entire text | |
| WO 2017/068893 A1 | 27 April 2017 | CN 107922665 A<br>entire text | |
| WO 2020/116577 A1 | 11 June 2020 | (Family: none) | |
| JP 2000-170846 A | 23 June 2000 | US 6287230 B1<br>entire text<br>EP 1008625 A1<br>entire text | |
| JP 2013-144748 A | 25 July 2013 | US 2014/0350190 A1<br>entire text<br>WO 2013/105370 A1<br>entire text | |
| WO 2015/177838 A1 | 26 November 2015 | US 2016/0280894 A1<br>entire text | |
| JP 2019-123852 A | 25 July 2019 | US 2019/0219953 A1<br>entire text | |
| JP 2001-151822 A | 05 June 2001 | (Family: none) | |
| US 2020/0190296 A1 | 18 June 2020 | WO 2018/119490 A1<br>entire text<br>EP 3562868 A1<br>entire text | |
| WO 2014/157602 A1 | 02 October 2014 | US 2016/0039999 A1<br>entire text<br>EP 2980148 A1<br>entire text | |
| WO 2003/072651 A1 | 04 September 2003 | AU 2002240519 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012067235 A
- JP H10298328 A